# EUROPEAN PATENT SPECIFICATION

(11) **EP 3 621 370 B1**
(45) Date of publication and mention of the grant of the patent: **29.07.2026**
(21) Application number: 17908757.2
(22) Date of filing: 02.05.2017
(51) Int. Cl.: H04W 56/00, H04W 72/04

(54) **BASE STATION DEVICE, USER DEVICE AND COMMUNICATION METHOD**
BASISSTATIONSVORRICHTUNG, BENUTZERVORRICHTUNG UND KOMMUNIKATIONSSTEUERUNGSVERFAHREN
DISPOSITIF DE STATION DE BASE, DISPOSITIF UTILISATEUR ET PROCÉDÉ DE COMMUNICATION

(43) Date of publication of application: 11.03.2020
(73) Proprietor: NTT DOCOMO, INC., Chiyoda-ku Tokyo 100-6150 (JP)
(72) Inventor: TAKEDA, Daiki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2017/017316
(87) International publication number: WO 2018/203417

(56) References cited:
- WO-A1-2016/006449
- US-A1- 2015 085 795
- SAMSUNG: "SS BW and multiplexing", vol. RAN WG1, no. Spokane, USA; 20170116 - 20170120, 16 January 2017 (2017-01-16), XP051208399, Retrieved from the Internet <URL:http://www.3gpp.org/ftp/Meetings_3GPP_SYNC/RAN1/Docs/> [retrieved on 20170116]
- CONVIDA WIRELESS: "Design Considerations on SS Burst Set", vol. RAN WG1, no. Athens, Greece; 20170213 - 20170217, 7 February 2017 (2017-02-07), XP051221437, Retrieved from the Internet <URL:http://www.3gpp.org/ftp/tsg_ran/WG1_RL1/TSGR1_88/Docs/> [retrieved on 20170207]
- ERICSSON: "Basic access configuration acquisition principles for NR", vol. RAN WG2, no. Reno, Nevada, USA; 20161114 - 20161118, 13 November 2016 (2016-11-13), XP051177948, Retrieved from the Internet <URL:http://www.3gpp.org/ftp/Meetings_3GPP_SYNC/RAN2/Docs/> [retrieved on 20161113]
- NOKIA ET AL.: "On NR synchronization signal periodicity", 3GPP TSG-RAN WG1 MEETING #87 RL-1612804, 4 November 2016 (2016-11-04), pages 1 - 5, XP051189480, Retrieved from the Internet <URL:http://www.3gpp.Org/ftp/tsg-ran/WG1-RL1/TSGR1-87/Docs/R1-1612804.zip> [retrieved on 20170711]
- INTERDIGITAL COMMUNICATIONS: "On Synchronization Signal Block and Indication", 3GPP TSG-RAN WG1 MEETING #88BIS RL-1705498, 25 March 2017 (2017-03-25), pages 1 - 5, XP051251955, Retrieved from the Internet <URL:http://www.3gpp.org/ftp/tsg_ran/WG1_RL1/TSGR1_88b/Docs/R1-1705498.zip> [retrieved on 20170711]
- HUAWEI ET AL.: "NR Primary and Secondary Synchronization Signals Design", 3GPP TSG-RAN WG1 MEETING #87 R1-1611261, 5 November 2016 (2016-11-05), pages 1 - 10, XP051189830, Retrieved from the Internet <URL:http://www.3gpp.org/ftp/tsg_ran/WG1_RL1/TSGR1_87/Docs/R1-1611261.zip>

## Description

### TECHNICAL FIELD

This invention relates to a base station, a user device, and a communication method in a wireless communication system.

### BACKGROUND ART

In 3GPP (3rd Generation Partnership Project), to achieve higher system capacity, higher data transmission speed, lower latency in wireless section, and the like, a wireless communication standard called 5G or NR (New Radio) has been discussed (hereinafter, the wireless communication standard will be referred to as "NR"). In NR, in order to fulfill required conditions in which the throughput is equal to or more than 10 Gbps and the latency in a wireless section is equal to or less than 1 ms, various wireless communication technologies have been discussed.

In NR, in an initial access for establishing connection between a user device and a base station, the user device performs cell detection and cell identification using a synchronization signal transmitted from the base station, and performs acquisition of part of system information necessary for initial access (see Non-Patent Document 1 for example).

Further, in NR, use of a wide frequency range, from a low frequency band such as that used in LTE (Long Term Evolution) to a much higher frequency band than LTE, is assumed. Especially, because a propagation loss increases in a high frequency band, in order to compensate for the propagation loss, applying beamforming with narrow beam widths has been discussed (see Non-Patent Document 2 for example).

Non-Patent Document 3 describes SS block index indication. The SS block index should be detected by UE during initial access. An SS block comprises a combination of synchronization signals, broadcast signals, and reference signals.

Non-Patent Document 4 describes design considerations on SS burst set. The SS block may be periodically transmitted with a periodical time T, i.e. SS burst periodicity.

Non-Patent Document 5 describes basic access configuration acquisition principles for NR. The broadcast SIBs include the configuration data needed to enable the UE to send a random access preamble on the PRACH and receive and decode a Random Access Response.

Non-Patent Document 6 describes NR synchronization signal periodicity.

Patent Document 1 describes a base station to transmit repetitions of broadcast information and for a UE to detect the broadcast information.

### [Prior-Art Documents]

[Non-Patent Document 1] 3GPP TS 36.213 V14.2.0 (2017-03)
[Non-Patent Document 2] 3GPP TS 36.211 V14.2.0 (2017-03)
[Non-Patent Document 3] 3GPP DRAFT; R1-1700883
[Non-Patent Document 4] 3GPP DRAFT; R1-1702579
[Non-Patent Document 5] 3GPP DRAFT; R2-168298
[Non-Patent Document 6] 3GPP DRAFT; R1-1612804 [Patent Document 1] US 2015/085795 A1

### SUMMARY OF INVENTION

### [PROBLEM TO BE SOLVED BY THE INVENTION]

In NR, a synchronization signal and part of system information necessary for initial access is mapped to a radio frame using a resource unit called an SS block (Synchronization Signal block) including contiguous OFDM (Orthogonal Frequency Division Multiplexing) symbols. Further, the SS block is used for forming an SS burst including one or more SS blocks, and for forming an SS burst set including one or more SS bursts. A period in which an SS burst set is transmitted from a base station is defined as SS burst set periodicity. A default value of SS burst set periodicity is 20 ms.

With respect to the SS burst set periodicity, values other than the default of 20 ms (such as 5 ms, 10 ms, or 80 ms) may be used in a mixed manner. Therefore, a case may happen in which the SS burst set periodicity assumed by a user device is different from an actual SS burst set periodicity.

The present invention is made in view of the above problem. An object of the present invention is to provide a technique used in a wireless communication system including a base station and a user device, for achieving an efficient initial access between the base station and the user device, by sending an indication of a transmission period of a block set including a synchronization signal and system information from the base station to the user device.

### [MEANS FOR SOLVING THE PROBLEM]

This object is accomplished by the subject-matter of the independent claims. The dependent claims concern particular embodiments.

### [ADVANTAGE OF THE INVENTION]

According to the present disclosure, a technique can be provided used in a wireless communication system including a base station and a user device, for achieving an efficient initial access between the base station and the user device, by transmitting an indication of a transmission period of a block set including a synchronization signal and system information from the base station to the user device.

### BRIEF DESCRIPTION OF DRAWINGS

FIG. 1 is a diagram illustrating an exemplary configuration of a wireless communication system according to an embodiment of the present invention;
FIG. 2 is a diagram illustrating an example (1) of an operation of an initial access;
FIG. 3 is a diagram illustrating an example (2) of the operation of the initial access;
FIG. 4 is a diagram illustrating an example (3) of the operation of the initial access;
FIG. 5 is a diagram illustrating an example (1) of an indication method of an SS block index;
FIG. 6 is a diagram illustrating an example (2) of the indication method of the SS block index;
FIG. 7 is a diagram illustrating an example of a sequence of an initial access process according to the embodiment of the present invention;
FIG. 8 is a diagram illustrating an example (1) of an indication method of an SS burst set periodicity;
FIG. 9 is a diagram illustrating an example (2) of the indication method of the SS burst set periodicity;
FIG. 10 is a diagram illustrating an example (3) of the indication method of the SS burst set periodicity;
FIG. 11 is a diagram illustrating a functional configuration of a base station 100;
FIG. 12 is a diagram illustrating a functional configuration of a user device 200; and
FIG. 13 is a diagram illustrating an example of a hardware configuration of the base station 100 and the user device 200.

### DETAILED DESCRIPTION OF THE PREFERRED EMBODIMENTS

Embodiments of the present invention will be described below with reference to the drawings. Note that the embodiments that will be described below are simply an example, and embodiments to which the present invention is applied are not limited to the following embodiments.

When operating a wireless communication system according to one or more embodiments of the present invention, conventional technologies may be used appropriately. The conventional technologies include existing LTE, for example, but the conventional technologies are not limited to existing LTE. In addition, the term "LTE" used in the present specification includes LTE-Advanced and communication standards after LTE-Advanced (such as NR).

Further, in the embodiments to be described below, terms that are used in existing LTE such as SS (Synchronization Signal), PSS (Primary SS), SSS (Secondary SS), or PBCH (Physical broadcast channel), will be used for the sake of convenience, but signals or functions similar to them may be referred to by different names. Further, in the following embodiments, the above terms in NR will be denoted as, for example, NR-SS, NR-PSS, NR-SSS, or NR-PBCH.

In the following, an overall configuration of a system, and an example of an initial access process (procedure) will be described as a basic example. After the description of the basic example, embodiments 1 to 3 of the present invention will be described. However, embodiments 1 to 3 may be based on a system or an initial access process (procedure) other than the basic example.

### (Basic Example)

### <Overall System Configuration>

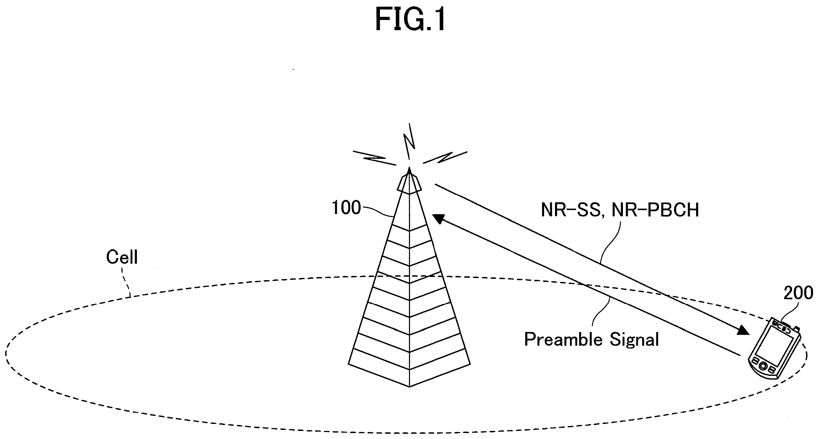

FIG. 1 is a diagram illustrating a configuration of a wireless communication system according to an embodiment of the present invention. The wireless communication system according to an embodiment of the present invention includes a base station 100 and a user device 200, as illustrated in FIG. 1. Although FIG. 1 illustrates a case in which the number of base stations 100 is one (1) and the number of user devices 200 is one (1), this is merely an example and multiple base stations 100 or multiple user devices 200 may be present in the wireless communication system.

The base station 100 provides one or more cells, and performs wireless communication with the user device 200. As illustrated in FIG. 1, the base station 100 transmits a synchronization signal and system information to the user device 200. Examples of the synchronization signal include NR-PSS and NR-SSS. The system information is transmitted via NR-PBCH, for example. Both the base station 100 and the user device 200 can transmit or receive a signal using beamforming. The user device 200 is a communication device equipped with a wireless communication function, such as a smartphone, a cellular phone, a tablet, a wearable terminal, or an M2M (Machine-to-Machine) communication module, and connects with the base station 100 wirelessly to use various communication services provided by the wireless communication system. In an initial access process (procedure), as illustrated in FIG. 1, the user device 200 transmits a preamble signal of a random access procedure to the base station 100. The random access procedure is performed based on the system information in NR-PDSCH (Physical downlink shared channel), in addition to the NR-PBCH received from the base station 100. In an embodiment of the present invention, either a TDD (Time Division Duplex) scheme or an FDD (Frequency Division Duplex) scheme may be adopted as a duplex scheme.

Further, in the following description, "transmitting a signal using a transmission beam" is the same as "transmitting a signal multiplied by a precoding vector (a signal precoded by a precoding vector)". Similarly, "receiving a signal using a reception beam" is the same as "multiplying a received signal by a predetermined weight vector". Further, transmitting a signal using a transmission beam may be expressed as transmitting a signal using a specific antenna port. Similarly, receiving a signal using a reception beam may be expressed as receiving a signal using a specific antenna port. The antenna port indicates a logical antenna port defined in 3GPP standard. However, a method of forming a transmission beam and a reception beam is not limited to the above method. For example, in a case in which the base station 100 and the user device 200 are equipped with multiple antennas, a method of changing an angle of each antenna may be used, a combination of the method using a precoding vector and the method of changing an angle of each antenna, or other methods may be used. Further for example, in a high frequency band, multiple different transmission beams may be used. A method using multiple transmission beams is referred to as a multi-beam operation, and a method using a single transmission beam is referred to as a single-beam operation.

### <Overall System Configuration>

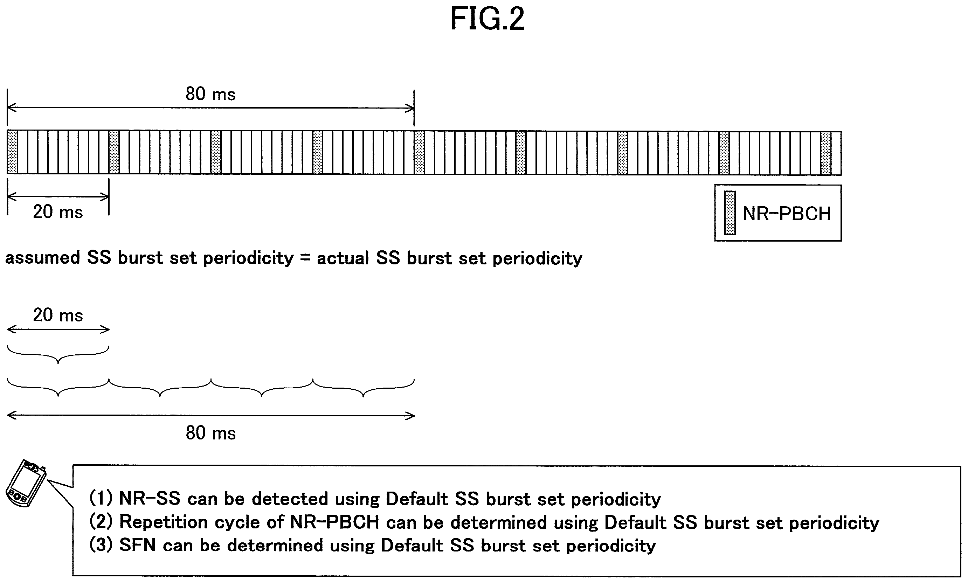

FIG. 2 is a diagram illustrating an example (1) of an operation of an initial access. FIG. 2, FIG. 3, and FIG. 4 illustrate initial access operations when there are different SS burst set periodicities. FIG. 2, FIG. 3, and FIG. 4 also illustrate cases in which an indication of an SS burst set periodicity is nottransmitted from the base station 100 to the user device 200. The SS burst set periodicity indicates a period in which an SS burst set is transmitted from the base station 100 to the user device 200. The SS burst set is a periodic group of resources including one or more SS blocks. The SS block is a resource unit including one NR-PSS, one NR-SSS, and two (2) to four (4) NR-PBCHs. The NR-PSS is a PSS used in NR that is transmitted from the base station 100 to the user device 200, and is used for at least initial time and frequency synchronization. The NR-SSS is an SSS used in NR that is transmitted from the base station 100 to the user device 200, and is used for at least detecting a cell ID (identity). The NR-PBCH is a PBCH used in NR that is transmitted from the base station 100 to the user device 200, and is a channel used for, after detecting the NR-PSS and the NR-SSS, transmitting part of system information required for an initial access, such as an SFN (System Frame Number) and other information necessary for acquiring other system information.

As illustrated in FIG. 2, a radio signal transmitted from the base station 100 to the user device 200 includes NR-PBCHs transmitted in every 20 ms. In FIG. 2, a case in which the SS burst set periodicity is 20 ms, which is a default value, is illustrated. Note that the default value of the SS burst set periodicity may be changed from 20 ms and, for example, may be set to 10 ms. Although FIG. 2 illustrates only NR-PBCHs for describing an operation to identify an SFN by acquiring system information, an NR-PSS and an NR-SSS are also transmitted from the base station 100 to the user device 200 in the similar timing as the NR-PBCH. That is, in FIG. 2, SS blocks are transmitted in every 20 ms.

It is assumed that the user device 200 identifies an SFN by acquiring the NR-PBCH four times during a period of 80 ms (which is an update cycle of the NR-PBCH). When a radio frame length in NR is fixed to 10 ms, the SFN is incremented by 1 every 10 ms. Accordingly, the lower 3 bits of the SFN are implicitly acquired when decoding NR-PBCH. That is, the NR-PBCH has the same configuration as LTE in that the lower 3 bits of the SFN are not explicitly included in system information. However, the configurations in LTE such as the number of bits explicitly included in the system information, a repetition period, or the number of repetitions, may be changed in NR.

In FIG. 2, it is assumed that an SS burst set periodicity assumed by the user device 200 is 20 ms, which is the same as an actual SS burst set periodicity of the system. As illustrated in FIG. 2, the user device 200 acquires the NR-PBCH four times during a period of 80 ms. The user device 200 can detect an NR-SS, and can determine a repetition period and identify the SFN by acquiring the NR-PBCH four times. Because the SS burst set periodicity assumed by the user device 200 is the same as the actual SS burst set periodicity, no problem occurs in an operation related to a cell search, and the user device 200 can proceed to a next step in the initial access.

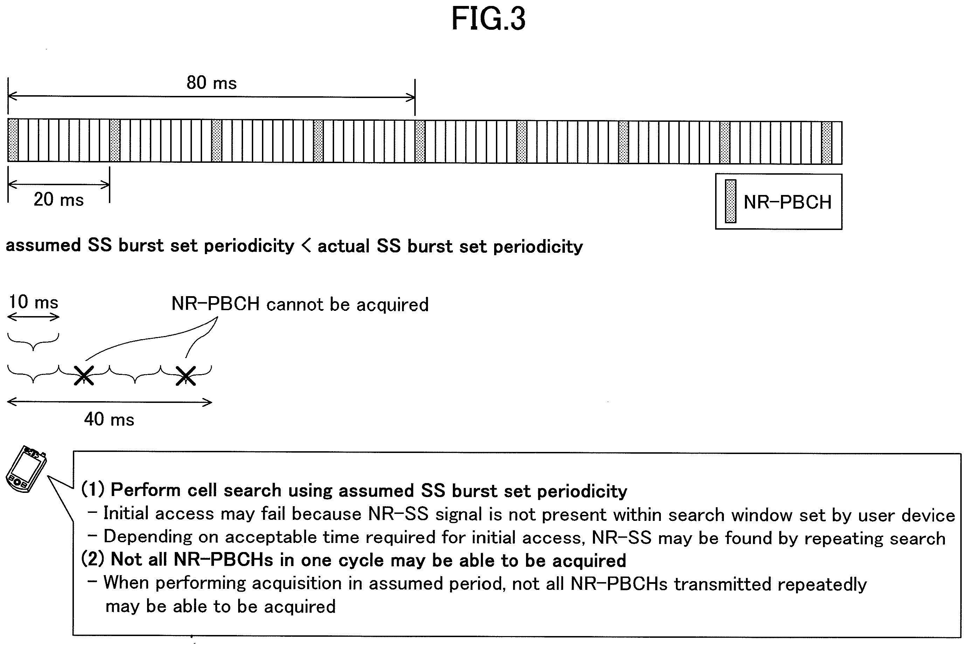

FIG. 3 is a diagram illustrating an example (2) of an operation of the initial access. In FIG. 3, it is assumed that an SS burst set periodicity assumed by the user device 200 is 10 ms, which is less than an actual SS burst set periodicity. As illustrated in FIG. 3, the user device 200 can acquire the NR-PBCH at most only twice during a period of 40 ms. Further, because the assumed SS burst set periodicity is 10 ms, an NR-SS cannot be detected within a given search window, and cell search may fail. If an NR-SS cannot be detected, the user device 200 fails in the initial access. After the user device 200 fails in the initial access, the user device 200 may be able to detect an NR-SS by executing cell search again, depending on an acceptable time required for an initial access configured by an upper layer or the like.

Also, when the assumed SS burst set periodicity is 10 ms, the user device 200 may fail to acquire every NR-PBCH included in one transmission period (cycle) of the NR-PBCH. With respect to FIG. 2 for example, because the actual SS burst set periodicity is 20 ms, two NR-PBCHs are included in one transmission period (cycle) of the NR-PBCH; however, each of the two NR-PBCHs acquired by the user device 200 may belong to different transmission periods (cycles). Further, if the SS burst set periodicity assumed by the user device 200 were a further shorter period, such as 5 ms, only one NR-PBCH would be acquired, or no NR-PBCH would be acquired.

As described above, because the SS burst set periodicity assumed by the user device 200 is less than the actual SS burst set periodicity, acquisition of an NR-PBCH may fail, and thus, acquisition of an SFN may fail.

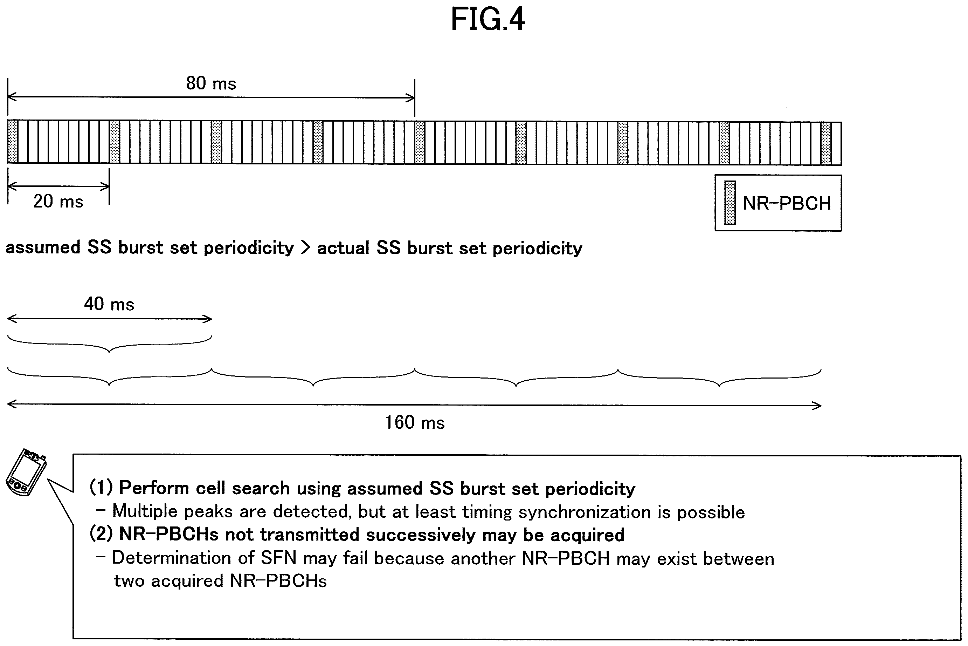

FIG. 4 is a diagram illustrating an example (3) of an operation of the initial access. In FIG. 4, it is assumed that an SS burst set periodicity assumed by the user device 200 is 40 ms, which is greater than the actual SS burst set periodicity. As illustrated in FIG. 4, the user device 200 acquires the NR-PBCH at least four times during a period of 160 ms. The user device 200 succeeds in detecting an NR-SS. However, multiple NR-SSs may be detected during a given search window.

Also, the four NR-PBCHs, which were acquired by the user device 200 during the period of 160 ms, may not belong to NR-PBCHs continuously transmitted from the base station 100. For example, in FIG. 4, the user device 200 may acquire every other NR-PBCH at every 40 ms. In this case, because information explicitly indicating an SFN included in an NR-PBCH differs from assumed information, the user device 200 may fail to identify an SFN.

As described above, because the SS burst set periodicity assumed by the user device 200 is greater than the actual SS burst set periodicity, acquisition of an NR-PBCH may fail.

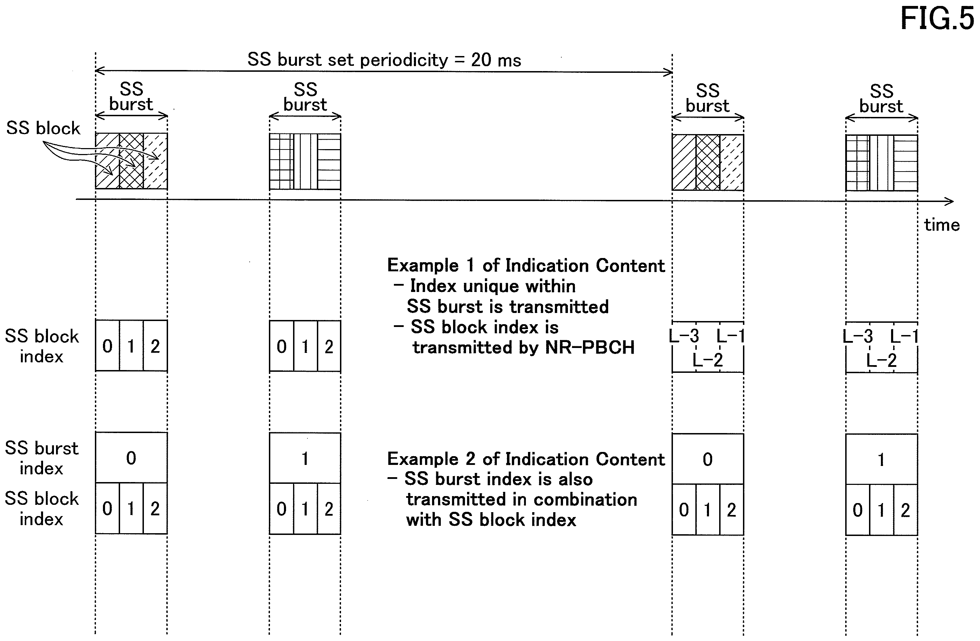

FIG. 5 is a diagram illustrating an example (1) of an indication method of an SS block index. In FIG. 5, an SS burst set periodicity is 20 ms. In a wireless frame illustrated in FIG. 5, an SS burst includes three SS blocks, and an SS burst set includes two SS bursts. An SS block index is information indicating a "time-position" (a position in the time axis) of the SS block, and is information used for identifying the SS block. For example, an SS block index may be transmitted via NR-PBCH from the base station 100 to the user device 200.

In "Example 1 of Indication Content" illustrated in FIG. 5, the base station 100transmits, to the user device 200, SS block indices that are each unique within the corresponding SS burst. That is, SS block indices of "0", "1", "2", "0", "1", "2", are assigned to six SS blocks included in an SS burst set in this order, for example. Alternatively, indices such as "L-3", "L-2", "L-1", "L-3", "L-2", "L-1" may be assigned to six SS blocks included in an SS burst set in this order.

In "Example 2 of Indication Content" illustrated in FIG. 5, the base station 100 transmits to the user device 200, SS block indices that are each unique within the corresponding SS burst, and additionally transmits an SS burst index associated with the SS block indices. That is, SS block indices of "0", "1", "2", "0", "1", "2" are assigned to six SS blocks included in an SS burst set in this order, for example; also, SS burst indices such as "0" and "1" are respectively assigned to two SS bursts included in the SS burst set.

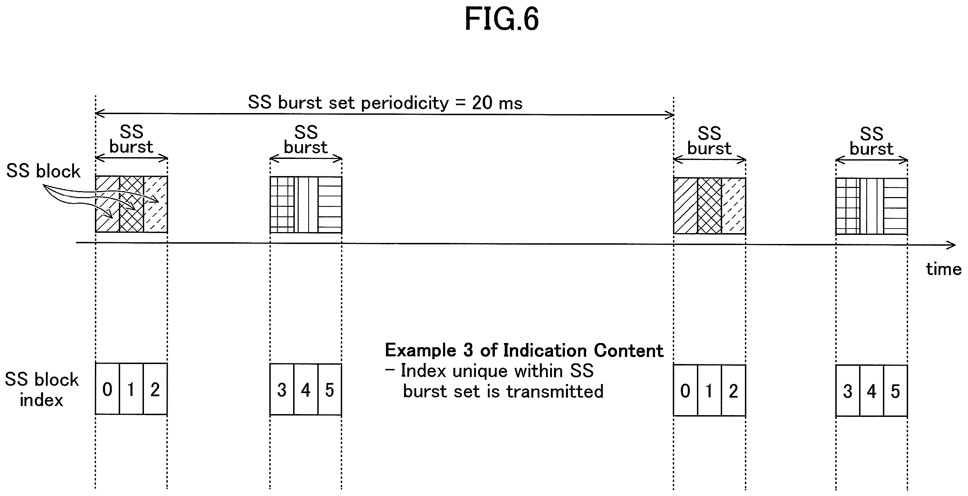

FIG. 6 is a diagram illustrating an example (2) of the indication method of an SS block index. In FIG. 6, an SS burst set periodicity is 20 ms. In a radio frame illustrated in FIG. 6, similar to FIG. 5, an SS burst includes three SS blocks, and an SS burst set includes two SS bursts.

In "Example 3 of Indication Content" illustrated in FIG. 6, the base station 100 transmits to the user device 200, SS block indices that are each unique within the corresponding SS burst set. That is, SS block indices of "0", "1", "2", "3", "4", "5" are assigned to six SS blocks included in an SS burst set in this order, for example. Similarly, with respect to a next SS burst set, SS block indices of "0", "1", "2", "3", "4", "5" are assigned.

### (Embodiment 1)

An embodiment 1 will be described in the following. It should be noted that, in the following embodiments 1, 2, and 3, techniques improved from the techniques described in the above basic example will be described. Therefore, with respect to non-improved techniques, unless otherwise stated, the basic example may be applied. Further, an embodiment 1, an embodiment 2, and an embodiment 3 may be respectively applied alone, or may be combined.

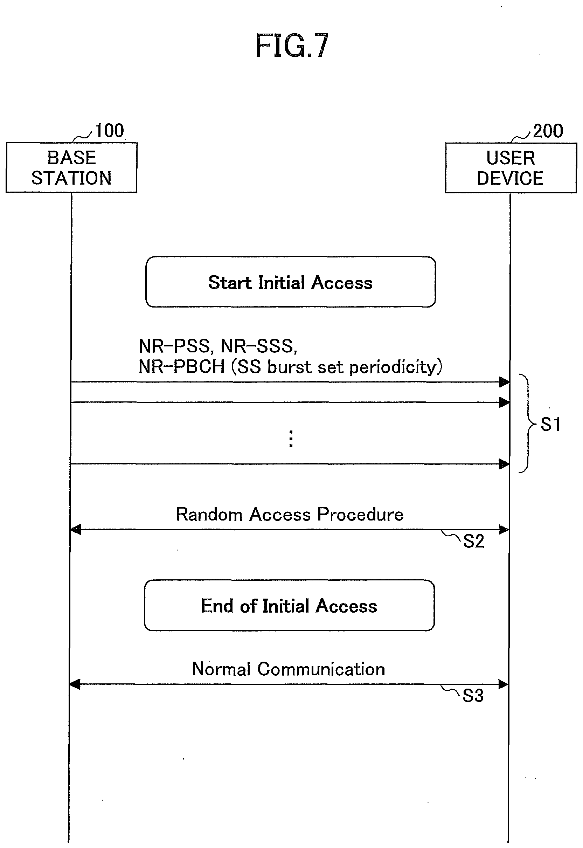

FIG. 7 is a diagram illustrating an example of a sequence of an initial access process according to an embodiment of the present invention. When an initial access process starts, at step S1, the base station 100 transmits an NR-PSS, an NR-SSS, and an NR-PBCH (i.e., an SS block) to the user device 200. The NR-PBCH includes information indicating an SS burst set periodicity. The base station 100 repeatedly transmits an SS burst set including multiple SS blocks in a period of the SS burst set periodicity. When multiple SS blocks are included in the SS burst set in a multi-beam operation environment, the multiple SS blocks may be respectively associated with different beams.

When the user device 200 receives an NR-PSS transmitted from the base station 100, the user device 200 uses the NR-PSS for at least initial time and frequency synchronization, and partial identification of a cell ID (identity). When the user device 200 receives an NR-SSS transmitted from the base station 100, the user device 200 uses the NR-SSS for at least partial identification of the cell ID. When the user device 200 receives an NR-PBCH transmitted from the base station 100, the user device 200 acquires an SS burst set periodicity and part of system information required for the initial access, such as an SFN (System Frame Number) and other information necessary for acquiring other system information. The other system information includes information such as a resource for performing a random access procedure. The user device 200 receives an SS block efficiently, by using an SS block transmission period for receiving an SS block, based on the acquired SS burst set periodicity. In a case in which multiple SS blocks are included in an SS burst set, when the user device 200 acquires an SS block, the user device 200 starts a random access procedure using a resource corresponding to a beam associated with the SS block (S2).

If the random access procedure succeeds between the base station 100 and the user device 200 at step S2, the initial access is completed and a normal communication is started (S3).

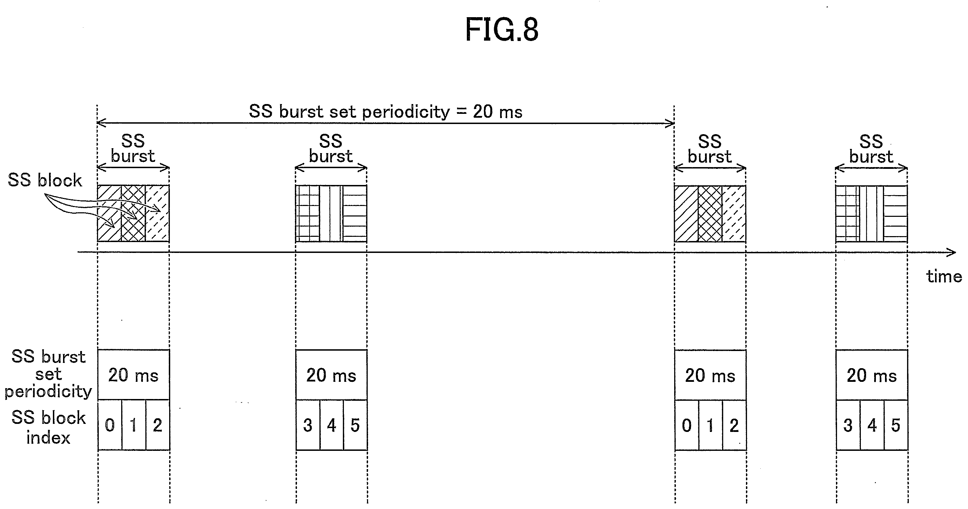

FIG. 8 is a diagram illustrating an example (1) of an indication method of an SS burst set periodicity. In FIG. 8, an SS burst set periodicity is 20 ms. In a radio frame illustrated in FIG. 8, an SS burst includes three SS blocks, and an SS burst set includes two SS bursts.

As illustrated in FIG. 8, the base station 100 transmits to the user device 200, SS block indices that are each unique within the corresponding SS burst set, and are combined with an SS burst set periodicity. The SS burst set periodicity may be included in every SS block on a per-SS block basis, or an SS block including the SS burst set periodicity and an SS block not including the SS burst set periodicity may be mixed in an SS burst (or in an SS burst set).

When the user device 200 receives an SS block including an SS burst set periodicity and an SS block index, the user device 200 can detect an NR-SS and receive an NR-PBCH based on a correct transmission period. Therefore, efficient cell search can be performed. Further, because the user device 200 can determine the transmission period of the acquired SS block (SS burst set periodicity), occurrence of a case can be prevented in which the user device 200 determines that the user device 200 has failed in receiving an SS block from a resource where no SS block is included, and occurrence of a case can also be prevented in which the user device 200 fails to receive an SS block from a resource where an SS block is included. As a result, the user device 200 can identify an SFN correctly. Therefore, the user device 200 can reduce a workload of an initial access process.

Furthermore, the base station 100 and the user device 200 can support a scenario (case) in which multiple different SS burst set periodicities are present.

It should be noted that the base station 100 may transmit, to the user device 200, information indicating combinations of values of the SS burst set periodicity and the SS block index described in "Example 2 of Notification Content" or "Example 4 of Notification Content" illustrated in FIG. 5.

According to the above example 1, because the base station 100 transmits an SS burst set periodicity, which is a transmission period of a block set including a synchronization signal and system information, to the user device 200, the user device 200 can perform an efficient initial access.

### (Embodiment 2)

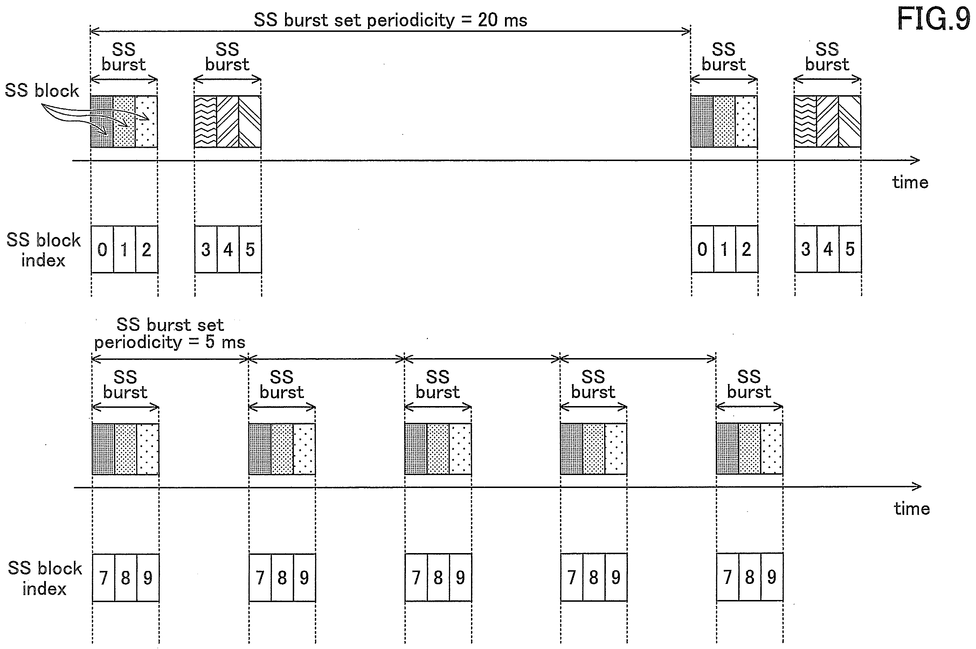

FIG. 9 is a diagram illustrating an example (2) of an indication method of the SS burst set periodicity, which illustrates a case in which the SS burst set periodicity is 20 ms and a case in which the SS burst set periodicity is 5 ms.

With respect to a radio frame in a case in which an SS burst set periodicity is 20 ms, illustrated in FIG. 9, an SS burst include three SS blocks, and an SS burst set includes two SS bursts. The base station 100 transmits to the user device 200, SS block indices that are each unique within the corresponding SS burst set. Here, the SS block indices are associated with a predefined SS burst set periodicity, and "0", "1", "2", "3", "4", and "5" are associated with "20 ms". Accordingly, if the user device 200 acquires an SS block having an SS block index of "0", "1", "2", "3", "4", or "5", the user device 200 can determine that an SS burst set periodicity of the SS block is "20 ms". The SS block indices may also be associated with a predefined configuration (structure) of an SS burst set. That is, SS block indices of "0", "1", "2", "3", "4", or "5" may indicate a configuration (structure) in which an SS burst includes three SS blocks and a SS burst set includes two SS bursts, and the SS block indices of "0", "1", "2", "3", "4", and "5" are assigned to the SS blocks included in the SS burst set in this order. Therefore, if the user device 200 receives SS block indices of "0", "1", "2", "3", "4", and "5", the user device 200 may determine that three SS blocks are included in an SS burst and that the two SS bursts are included in an SS burst set.

With respect to a radio frame in a case in which an SS burst set periodicity is 5 ms, illustrated in FIG. 9, an SS burst includes three SS blocks, and an SS burst set includes one SS burst. The base station 100 transmits to the user device 200, SS block indices that are each unique within the corresponding SS burst set. Similar to a case in which an SS burst set periodicity is 20 ms, the SS block indices are associated with a predefined SS burst set periodicity, and "7", "8", and "9" are each associated with "5 ms". Accordingly, if the user device 200 acquires an SS block having an SS block index of "7", "8", or "9", the user device 200 can determine that an SS burst set periodicity of the SS block is "5 ms". Similar to a case in which an SS burst set periodicity is 20 ms, the SS block indices may also be associated with a predefined configuration (structure) of an SS burst set. That is, SS block indices of "7", "8", and "9" may indicate a configuration (structure) in which an SS burst includes three SS blocks, and a burst set includes one SS burst. The SS block indices of "7", "8", and "9" are assigned to the SS blocks included in the SS burst set in this order. Therefore, if the user device 200 receives an SS block having an SS block index of "7", "8", or "9", the user device 200 may determine that three SS blocks are included in an SS burst and that the SS burst is included in an SS burst set.

The value of an SS burst set periodicity or the structure of an SS block associated with the above SS block indices is merely an example. Predefined information associated with SS block indices may be configured appropriately. For example, SS block indices of "10", "11", "12", and "13" may be associated with a case in which an SS burst set periodicity is 10 ms, a burst set includes two SS bursts, and an SS burst set includes two SS bursts.

According to the above-described embodiment 2, by transmitting an SS block index associated with predefined information, a transmission period of a block set including a synchronization signal and system information, that is, an SS burst set periodicity, can be indicated to the user device 200. By associating the predefined information with an SS block index, amount of information to be transmitted can be reduced, as compared with a method of transmitting both the SS burst set periodicity and the SS block index.

### (Embodiment 3)

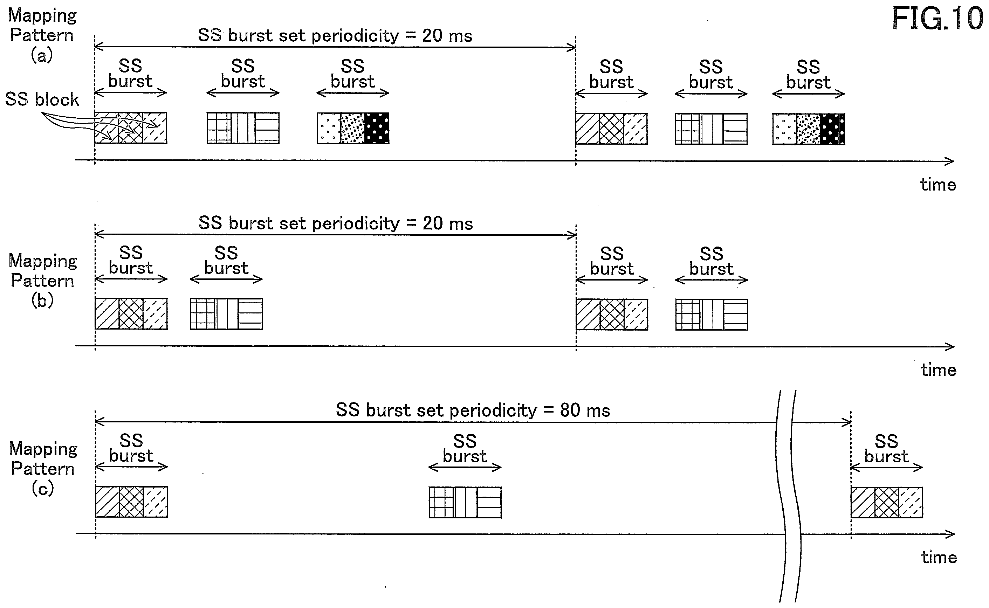

FIG. 10 is a diagram illustrating an example (3) of an indication method of an SS burst set periodicity. The base station 100 does not transmit an SS burst set periodicity itself to the user device 200, and, a predefined code (mapping pattern) indicating an SS burst set periodicity and a structure of an SS burst set is transmitted to the user device 200. In an example illustrated in FIG. 10, "mapping pattern (a)" is defined in advance by associating it with information indicating a configuration in which an SS burst set periodicity is 20 ms and a burst set includes three SS bursts each having three SS blocks, and associating it with information about "time-positions" (positions in the time axis) of a part or all of the SS bursts or the SS blocks. Accordingly, in a case in which the user device 200 receives a code of "mapping pattern (a)", the user device 200 can determine that an SS burst set periodicity is 20 ms and that a burst set includes three SS bursts each having three SS blocks, and can determine time-positions of a part or all of the SS bursts or the SS blocks. The information that is defined in association with the code of "mapping pattern (a)" may be a part of the above information items, such as an SS burst set periodicity.

Similarly, "mapping pattern (b)" illustrated in Fig. 10 is defined in advance by associating it with information indicating a configuration (structure) in which an SS burst set periodicity is 20 ms and a burst set includes two SS bursts each having three SS blocks, and associating it with information about time-positions of a part or all of the SS bursts or the SS blocks. Accordingly, in a case in which the user device 200 receives a code of "mapping pattern (b)", the user device 200 can determine that an SS burst set periodicity is 20 ms and that a burst set includes two SS bursts each having three SS blocks, and can determine time-positions of a part or all of the SS bursts or the SS blocks. The information that is defined in association with a code of "mapping pattern (b)" may be a part of the above information items, such as an SS burst set periodicity.

Similarly, in an example illustrated in FIG. 10, "mapping pattern (c)" is defined in advance by associating it with information indicating a structure in which an SS burst set periodicity is 80 ms and a burst set includes two SS bursts each having three SS blocks, and associating it with information about time-positions of a part or all of the SS bursts or the SS blocks. Accordingly, in a case in which the user device 200 receives a code of "mapping pattern (c)", the user device 200 can determine that an SS burst set periodicity is 20 ms and that a burst set includes two SS bursts each having three SS blocks, and can determine time-positions of a part or all of the SS bursts or the SS blocks. The information that is defined in association with a code of "mapping pattern (c)" may be a part of the above information items, such as only an SS burst set periodicity.

The information items that are defined in advance in association with a code may be combined appropriately. The information items that are defined in advance may also include information such as an SS block index or an SS burst index.

Further, the base station 100 may transmit information indicating a value of an SS burst set periodicity or a code indicating a mapping pattern in the following ways:
1) information is explicitly encoded and the explicitly-encoded result is transmitted via an NR-PBCH,
2) information is implicitly encoded and the implicitly-encoded result is transmitted via an NR-PBCH according to the followings six methods 1) to 6),
   Method 1: indication based on a sequence pattern of a DMRS (Demodulation Reference Signal) included in the NR-PBCH,
   Method 2: indication based on a scrambling code of the NR-PBCH,
   Method 3: indication based on a CRC (Cyclic Redundancy Check) masking of the NR-PBCH,
   Method 4: indication based on an RV (Redundancy Version) of the NR-PBCH,
   Method 5: indication based on an amount of cyclic shift applied to the encoded bits before scrambling of the NR-PBCH,
   Method 6: indication based on a timestamp offset during Polar coding,
3) information is implicitly encoded by using a scrambling sequence for an NR-SSS, and the implicitly-encoded result is transmitted. Specifically, the NR-SSS is scrambled using different sequences depending on SS burst set periodicities.

According to the embodiment 3, the base station 100 can indicate an SS burst set periodicity efficiently, which is a transmission period of a block set including a synchronization signal and system information, to the user device 200.

### (Configuration of Equipment)

Next, an example of functional configurations of the base station 100 and the user device 200 performing operations described above will be explained. Each of the base station 100 and the user device 200 has functions for implementing at least an embodiment 1 and an embodiment 2. Alternatively, each of the base station 100 and the user device 200 may have a part of the functions for implementing an embodiment 1 and an embodiment 2.

### <Base Station 100>

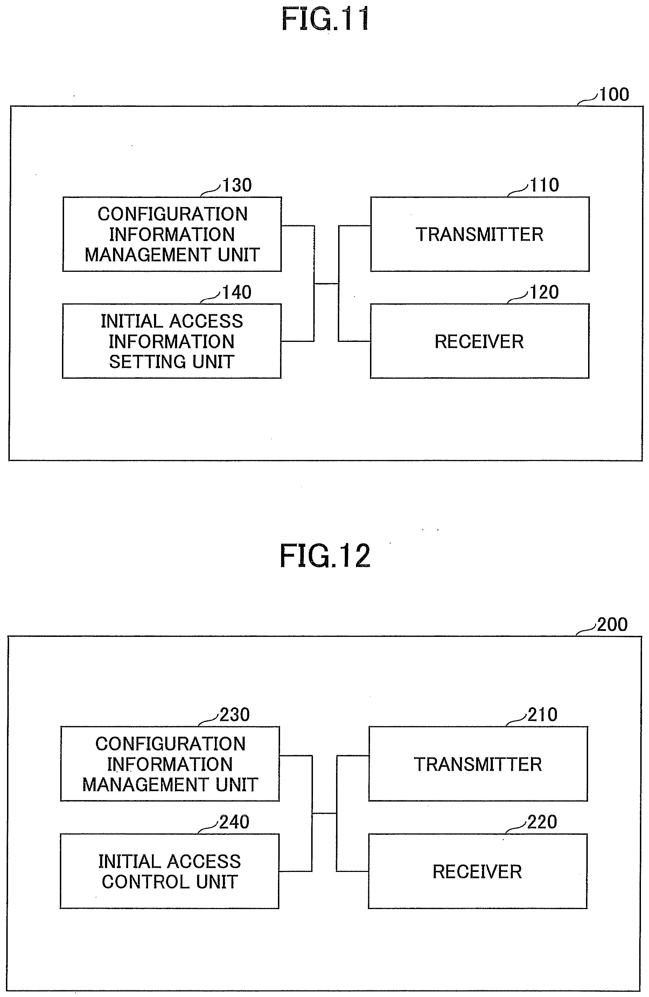

FIG. 11 is a diagram illustrating a functional configuration of the base station 100. As illustrated in FIG. 11, the base station 100 includes a transmitter 110, a receiver 120, a configuration information management unit 130, and an initial access information setting unit 140. The functional configuration illustrated in FIG. 11 is simply an example. Any types of division of functions may be applicable and each of the functions may have an arbitrary name, as long as the operations according to an embodiment of the present invention can be performed.

The transmitter 110 includes functions to generate a signal to be transmitted to the user device 200, and to transmit the signal wirelessly. The receiver 120 includes functions to receive various types of signals from the user device 200, and to obtain information of upper layers from the received signal.
The transmitter 110 also includes a function to transmit an NR-PSS, an NR-SSS, an NR-PBCH, a DL/UL control signal, or the like.

The configuration information management unit 130 stores pre-configured configuration information, and various configuration information items to be transmitted to the user device 200. Examples of contents of the configuration information items include: information concerning an NR-PSS and an NR-SSS, information included in an NR-PBCH, a configuration of an SS block included in an SS burst set, an SS burst set periodicity, an SS block index, and information concerning random access.

The initial access information setting unit 140 arranges SS blocks of the base station 100 described in the basic example and embodiments 1, 2, and 3, that is, an NR-PSS, an NR-SSS, and an NR-PBCH, in a radio frame. The initial access information setting unit 140 also configures information included in the NR-PBCH such as an SS burst set periodicity or an SS block index. The transmitter 110 uses the radio frame in which the SS blocks are arranged by the initial access information setting unit 140.

### <User Device 200>

FIG. 12 is a diagram illustrating a functional configuration of the user device 200. As illustrated in FIG. 12, the user device 200 includes a transmitter 210, a receiver 220, a configuration information management unit 230, and an initial access control unit 240. The functional configuration illustrated in FIG. 12 is simply an example. Any types of division of functions may be applicable and each of the functions may have an arbitrary name, as long as the operations according to an embodiment of the present invention can be performed.

The transmitter 210 generates a transmission signal from data to be transmitted, and transmits the transmission signal wirelessly. The receiver 220 receives various types of signals wirelessly, and obtains signals of upper layers from the received signals of a physical layer. The receiver 220 also includes a function to receive an NR-PSS, an NR-SSS, an NR-PBCH, a DL/UL control signal, or the like.

The configuration information management unit 230 stores various configuration information items received by the receiver 220 from the base station 100, and stores pre-configured configuration information. Examples of contents of the configuration information items include: information concerning an NR-PSS and an NR-SSS, information included in an NR-PBCH, a configuration of an SS block included in an SS burst set, an SS burst set periodicity, an SS block index, and information concerning random access.

The initial access control unit 240 performs control related to the initial access in the user device 200, described in the basic example or embodiments 1 to 3. Functional units concerning signal transmission in the initial access control unit 240 may be incorporated in the transmitter 210, and functional units concerning signal reception in the initial access control unit 240 may be incorporated in the receiver 220.

### <Hardware Configuration>

The block diagrams used for explaining the above embodiments (FIG. 11 and FIG. 12) illustrate blocks on a per functional block basis. These functional blocks (configuration units) are implemented by any combination of hardware and/or software. Further, an implementation method of these functional blocks is not limited to a specific one. That is, each functional block may be implemented by an apparatus in which multiple elements are physically and/or logically coupled to each other, or may be implemented by multiple physically and/or logically separated apparatuses that are connected (with a wire connection or a wireless connection, for example) directly and/or indirectly with each other.

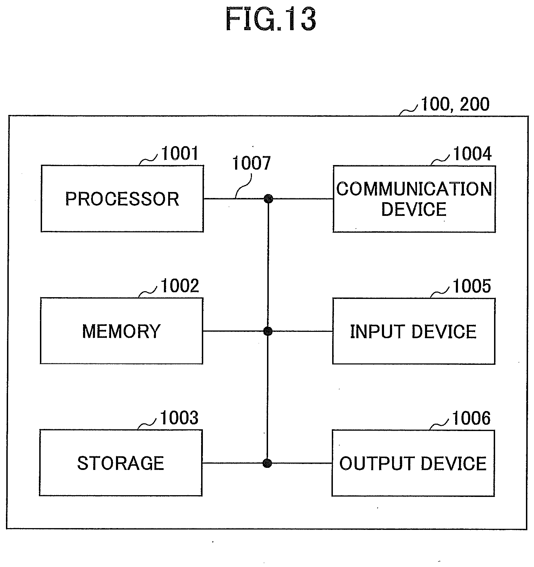

Further, for example, both the base station 100 and the user device 200 according to an embodiment of the present invention may be a computer performing processes according to an embodiment of the present invention. FIG. 13 is a diagram illustrating an example of a hardware configuration of the base station 100 or the user device 200 according to an embodiment of the present invention. Each of the base station 100 and the user device 200 mentioned above may be configured as a computing device including a processor 1001, a memory 1002, storage 1003, a communication device 1004, an input device 1005, an output device 1006, and a bus 1007.

Note that the term "device" may be deemed to be replaced with a circuit, an apparatus, or a unit. With respect to a hardware configuration of the base station 100 and the user device 200, the number of each device specified with the elements 1001 to 1006 in the drawing, which are included in the base station 100 and the user device 200, may be one or more. Further, a part of the devices may not be included in the base station 100 and the user device 200.

Each function of the base station 100 and the user device 200 is implemented by the processor 1001 performing arithmetic operations, and controlling communication via the communication device 1004 and data read and/or write on the memory 1002 and the storage 1003, by loading a given program (software) on the hardware such as the processor 1001 or the memory 1002.

The processor 1001 performs overall control of the computer, by executing an operating system, for example. The processor 1001 may be configured by a central processing unit (CPU) including an interface with peripheral devices, a controller device, an arithmetic unit, a register, and the like.

The processor 1001 further performs various processes in accordance with a program (program code), a software module, or data, loaded from the storage 1003 and/or the communication device 1004 onto the memory 1002. The program used here is a program for causing a computer to perform at least a part of the operations described in the above embodiments. For example, the transmitter 110, the receiver 120, the configuration information management unit 130, and the initial access information setting unit 140 in the base station 100 illustrated in FIG. 10 may be implemented by a control program stored in the memory 1002 and executed by the processor 1001. Also for example, the transmitter 210, the receiver 220, the configuration information management unit 230, and the initial access control unit 240 in the user device 200 illustrated in FIG. 12 may be implemented by a control program stored in the memory 1002 and executed by the processor 1001. In the above description, a case in which each of the above various processes is executed by a single processor 1001 has been explained, but the processes may be executed by two or more processors 1001 in parallel or sequentially. The processor 1001 may be implemented by one chip or more than one chips. Note that the program may be transmitted from a network via an electric telecommunication line.

The memory 1002 is a computer-readable recording medium, and may be configured by at least one of ROM (Read Only Memory), EPROM (Erasable Programmable ROM), EEPROM (Electrically Erasable Programmable ROM), RAM (Random Access Memory), and the like. The memory 1002 may be referred to as a register, a cache, a main memory, or the like. The memory 1002 can retain an executable program (program code) or software module necessary for performing the processes according to the embodiment of the present invention.

The storage 1003 is a computer-readable recording medium, and may be configured by at least one of an optical disk such as a CD-ROM (Compact Disc ROM), a hard disk drive, a flexible disk, a magneto-optical disk (such as a compact disc, a digital versatile disc, a Blu-ray disc (registered trademark)), a smartcard, a flash memory (such as a card, a stick, or a key drive), a floppy disk (registered trademark), and a magnetic stripe. The storage 1003 may be referred to as an auxiliary storage device. The above storage media may be a medium for a database, a server, or the like, including the memory 1002 and/or the storage 1003.

The communication device 1004 is hardware (transmission and reception device) for performing communication between computers through a wired and/or wireless network, and is also referred to as, for example, a network device, a network controller, a network card, a communication module, or the like. For example, the transmitter 110 and the receiver 120 in the base station 100 may be implemented by the communication device 1004. Also for example, the transmitter 210 and the receiver 220 in the user device 200 may be implemented by the communication device 1004.

The input device 1005 is an input device for receiving an input from outside (such as a keyboard, a mouse, a microphone, a switch, a button, or a sensor). The output device 1006 is an output device for performing output to outside (such as a display, a speaker, or an LED lamp). Note that the input device 1005 and the output device 1006 may be integrated into a single device (for example, a touch panel).

Further, each of the devices such as the processor 1001 or the memory 1002 is connected via the bus 1007 for communication. The bus 1007 may be a single bus, or the devices may be connected via different buses.

Further, the base station 100 and the user device 200 may include hardware, such as a microprocessor, a digital signal processor (DSP), an ASIC (Application Specific Integrated Circuit), a PLD (Programmable Logic Device), or an FPGA (Field Programmable Gate Array).
Part of or all of each functional block may be implemented by the above hardware. For example, the processor 1001 may be implemented by at least one of the hardware.

### (Summary of Embodiment)

As described above, according to an embodiment of the present invention, a base station for communicating with a user device is provided. The base station includes a setting unit configured to set, to a block including a synchronization signal and system information, information indicating a transmission period of a block set including the one or more blocks, and a communication unit configured to transmit the block set to the user device in the transmission period, and to perform an initial access process with the user device based on the system information included in the block.

According to the above configuration, in a wireless communication system including a base station 100 and a user device 200, because the base station 100 indicates an SS burst set periodicity, which is a transmission period of a block set including one or more blocks including a synchronization signal and system information, to the user device 200, an efficient initial access can be accomplished between the base station 100 and the user device 200.

The block may also include information indicating a time-position of the block. The configuration enables the user device 200 to acquire an SS block efficiently.

The information indicating the time-position of the block may be defined for each of the block sets, and may be associated with the transmission period of the block set. According to the above configuration, an amount of information transmitted by the base station 100 can be reduced, as compared with a case in which both an SS burst set periodicity and the information indicating the time-position of the block (that is, the SS block index) are transmitted.

The block may include a predefined code associated with a transmission period of the block set, with a structure of the block set, or with the information indicating the time-position of the block, and the code may be explicitly or implicitly encoded into a channel including the system information. According to the above configuration, the base station 100 can transmit various information items related to a block, that is, an SS block, to the user device 200 efficiently.

Also according to an embodiment of the present invention, a user device for communicating with a base station is provided. The user device includes a receiver configured to receive a block including information indicating a transmission period of a block set including the one or more blocks including a synchronization signal and system information, and to receive the block based on the transmission period, and includes a control unit configured to perform an initial access process with the base station based on the system information included in the block.

According to the above configuration, in a wireless communication system including a base station 100 and a user device 200, because the user device 200 acquires an SS burst set periodicity, which is a transmission period of a block set including one or more blocks including a synchronization signal and system information, from the base station, an efficient initial access can be accomplished between the base station 100 and the user device 200.

Also according to an embodiment of the present invention, a communication method performed by a base station for communicating with a user device is provided. The method includes a setting step for setting, to a block including a synchronization signal and system information, information indicating a transmission period of a block set including the one or more blocks, a transmitting step for transmitting the block to the user device in the transmission period, and a communication step for performing an initial access process with the user device based on the system information included in the block.

According to the above configuration, in a wireless communication system including a base station 100 and a user device 200, because the base station 100 indicates an SS burst set periodicity, which is a transmission period of a block set including one or more blocks including a synchronization signal and system information, to the user device 200, an efficient initial access can be accomplished between the base station 100 and the user device 200.

### (Supplement of Embodiment)

Specific examples of numerical values have been used in the description in order to facilitate understanding of the invention. However, these numerical values are merely an example, and any other appropriate values may be used, unless otherwise stated. The separations of the items in the above description are not essential to the present invention. Depending on necessity, subject matter described in two or more items may be combined and used, and subject matter described in an item may be applied to subject matter described in another item (if they do not contradict). A boundary of a functional unit or a processing unit in the functional block diagrams may not necessarily correspond to a boundary of a physical component. Operations performed by multiple functional units may be executed in a single physical component, or an operation of a single functional unit may be executed by multiple physical components. With respect to procedures described in the embodiment, order can be rearranged, if no conflict occurs. Though the base station 100 and the user device 200 are described by using the functional block diagrams for the convenience of description, such devices may be embodied by hardware, software, or a combination of hardware and software. Each of the software executed by the processor included in the base station 100 in accordance with the embodiment of the present invention, and the software executed by the processor included in the user device 200 in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, or the like.

Further, indication of information is not necessarily made in accordance with an aspect or an embodiment described in the present specification, but may be performed using other methods. For example, indication of information may be performed using a physical layer signaling (such as DCI (Downlink Control Information) or UCI (Uplink Control Information)), an upper layer signaling (such as an RRC (Radio Resource Control) signaling, a MAC (Medium Access Control) signaling, or broadcast information (MIB (Master Information Block) or SIB (System Information Block))), other signaling, or a combination of these signaling. Also, an RRC signaling may be referred to as an RRC message, and may be a message such as an RRC Connection Setup message, or an RRC Connection Reconfiguration message.

An aspect or an embodiment described in the present specification may be applied to a system using an appropriate system such as LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), or Bluetooth (registered trademark), or applied to a next-generation system enhanced based on the above systems.

With respect to procedures, sequences, flowcharts, or the like, described in an aspect or an embodiment of the present specification, order can be changed if no conflict occurs. A method described in the present specification discloses various step elements in an exemplary order, and the order is not limited to the disclosed order.

A specific operation, which is described in the present specification to be performed at a base station 100, may be performed at an upper node of the base station 100. In a network having one or more network nodes including a base station 100, it is obvious that various operations performed for communication with a user device 200 may be performed at the base station 100 and/or a network node other than the base station 100 (such as, but not limited to, an MME or an S-GW). The above description explains a case in which one network node other than the base station 100 is present, but the network node may be a combination of multiple other network nodes (such as an MME and an S-GW).

The user device 200 may be referred to as, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, by a person skilled in the art.

The base station 100 may be referred to as, an NB (NodeB), an eNB (enhanced NodeB), a gNB, a base station, or other appropriate terms, by a person skilled in the art.

Terms "determine (determining)" used in the present specification may include a wide variety of operations. "Determining" may mean that, for example, judging, calculating, computing, processing, deriving, investigating, looking up (such as searching a table, a database or other data structure), or ascertaining is performed. "Determining" may also mean that receiving (such as receiving information), transmitting (such as transmitting information), inputting, outputting, or accessing (such as accessing data in a memory) is performed. Further, "Determining" may also mean that resolving, selecting, choosing, establishing, or comparing is performed. That is, that a certain action/operation is regarded as "determined" may be included in a scope of "determining".

A phrase "based on" that is used in the present specification does not mean "based on only", unless otherwise stated. In other words, the phrase "based on" means both "based on only" and "based on at least".

In a case in which a term "include", "including", or modifications of the term is used in the present specification or in the claims, these terms are intended to be comprehensive, similar to a term "comprising". Further, a term "or" used in the present specification or in the claims is not intended to be an exclusive or.

In an entirety of the present disclosure, if an article, such as "a", "an", or "the" in English, is added to a noun by translation, the article means that the noun may include one in number or more than one in number, unless otherwise stated.

Note that an SS block or an SS burst is an example of a block including a synchronization signal and system information. An SS burst set is an example of a block set composed of the one or more blocks including the synchronization signal and the system information. An SS burst set periodicity is an example of a transmission cycle of the block set composed of the one or more blocks including the synchronization signal and the system information. An initial access information setting unit 140 is an example of a setting unit. A transmitter 110 and a receiver 120 are an example of a communication unit. The initial access control unit 240 is an example of a control unit. An NR-PBCH is an example of a channel including system information.

Although an embodiment of the present invention has been described in detail in the above description, it is obvious for a person skilled in the art that the present invention is not limited to the embodiments described in the present specification. The present invention can be implemented as a modified embodiment or an altered embodiment without departing an aim and a scope of the present invention defined with the claims. Accordingly, the description of the present specification is for explaining examples, and does not intend to limit a scope of the present invention.

### LIST OF REFERENCE SYMBOLS

- 100: base station
- 200: user device
- 110: transmitter
- 120: receiver
- 130: configuration information management unit
- 140: initial access information setting unit
- 200: user device
- 210: transmitter
- 220: receiver
- 230: configuration information management unit
- 240: initial access control unit
- 1001: processor
- 1002: memory
- 1003: storage
- 1004: communication device
- 1005: input device
- 1006: output device

## Claims

1. A terminal (200) comprising:
a receiving unit (220) configured to receive, from a base station (100) based on a transmission periodicity, a synchronization signal, SS, block containing a synchronization signal and a physical broadcast channel, PBCH, including system information indicating the transmission periodicity for the SS block and to receive, from the base station (100), an index corresponding to a location in time domain of the SS block based on a sequence to generate a reference signal of the PBCH and a part of data indicated by the PBCH; and
a control unit (240) configured to acquire information to perform random access from the system information contained in the SS block and perform random access with the base station using the information to perform random access.

2. A base station (100) comprising:
a transmitting unit (110) configured to transmit, to a terminal, information indicating a transmission periodicity for a synchronization signal, SS, block containing a synchronization signal and a physical broadcast channel, PBCH, including system information and to transmit, to the terminal, an index corresponding to a location in time domain of the SS block based on a sequence to generate a reference signal of the physical broadcast channel and a part of data indicated by the PBCH;
a communicating unit (140) configured to transmit the SS block to the terminal based on the transmission periodicity and perform random access with the terminal using the information to perform random access included in the system information contained in the SS block.

3. A method for communication in a terminal comprising:
Receiving (S1), from a base station based on a transmission periodicity, a synchronization signal, SS, block containing a synchronization signal and a physical broadcast channel, PBCH, including system information indicating the transmission periodicity for the SS block, and receiving, from the base station, an index corresponding to a location in time domain of the SS block based on a sequence to generate a reference signal of the PBCH and a part of data indicated by the PBCH;
acquiring information to perform random access from the system information contained in the SS block;
performing (S2) random access with the base station using the information to perform random access.

4. A method for communication in a base station comprising:
Transmitting (S1), to a terminal, information indicating a transmission periodicity for a synchronization signal, SS, block containing a synchronization signal and a physical broadcast channel, PBCH, including system information and transmitting, to the terminal, an index corresponding to a location in time domain of the SS block based on a sequence to generate a reference signal of the PBCH transmitting the system information and a part of data indicated by the PBCH;
Transmitting (S1) the SS block to the terminal based on the transmission periodicity;
Performing (S2) random access with the terminal using information to perform random access included in the system information contained in the SS block.

5. A wireless communication system comprising: a terminal; and a base station, wherein
the base station includes:
a transmitting unit configured to transmit, to the terminal, information indicating a transmission periodicity for a synchronization signal, SS, block containing a synchronization signal and a physical broadcast channel, PBCH, including system information and to transmit, to the terminal, an index corresponding to a location in time domain of the SS block based on a sequence to generate a reference signal of the PBCH transmitting the system information and a part of data indicated by the PBCH; and
a communicating unit configured to transmit the SS block to the terminal based on the transmission periodicity and perform random access with the terminal using information to perform random access included in the system information contained in the SS block, and
the terminal includes:
a receiving unit configured to receive, from the base station based on the transmission periodicity, the SS block and to receive, from the base station, the index; and
a control unit configured to acquire information to perform random access from the system information contained in the SS block and perform random access with the base station using the information to perform random access.

## Patentansprüche

1. Endgerät (200), umfassend:
eine Empfangseinheit (220), die konfiguriert ist, von einer Basisstation (100), basierend auf einer Übertragungsperiodizität, einen Synchronisationssignal-, SS-, Block zu empfangen, der ein Synchronisationssignal und einen physikalischen Broadcast-Kanal, PBCH, enthält, einschließlich Systeminformationen, die die Übertragungsperiodizität für den SS-Block angeben, und von der Basisstation (100) einen Index zu empfangen, der einer Position im Zeitbereich des SS-Blocks entspricht, basierend auf einer Sequenz, um ein Referenzsignal des PBCH und einen durch den PBCH angegebenen Teil von Daten zu erzeugen; und
eine Steuereinheit (240), die konfiguriert ist, Informationen zum Durchführen von Direktzugriff aus der in dem SS-Block enthaltenen Systeminformation zu erlangen und Direktzugriff mit der Basisstation unter Verwendung der Information zum Durchführen von Direktzugriff durchzuführen.

2. Basisstation (100), umfassend:
eine Sendeeinheit (110), die konfiguriert ist, an ein Endgerät Informationen zu übertragen, die eine Übertragungsperiodizität für einen Synchronisationssignal-, SS-, Block angeben, der ein Synchronisationssignal und einen physikalischen Broadcast-Kanal, PBCH, enthält, einschließlich Systeminformationen, und an das Endgerät einen Index zu übertragen, der einer Position im Zeitbereich des SS-Blocks entspricht, basierend auf einer Sequenz, um ein Referenzsignal des physikalischen Broadcast-Kanals und einen durch den PBCH angegebenen Teil von Daten zu erzeugen;
eine Kommunikationseinheit (140), die konfiguriert ist, den SS-Block an das Endgerät, basierend auf der Übertragungsperiodizität, zu übertragen und Direktzugriff mit dem Endgerät unter Verwendung der in der in dem SS-Block enthaltenen Systeminformationen enthaltenen Informationen zum Durchführen von Direktzugriff durchzuführen.

3. Verfahren zur Kommunikation in einem Endgerät, umfassend:
Empfangen (S1) von einer Basisstation, basierend auf einer Übertragungsperiodizität, eines Synchronisationssignal-, SS-, Blocks, der ein Synchronisationssignal und einen physikalischen Broadcast-Kanal, PBCH, enthält, einschließlich Systeminformationen, die die Übertragungsperiodizität für den SS-Block angeben, und Empfangen von der Basisstation eines Index, der einer Position im Zeitbereich des SS-Blocks entspricht, basierend auf einer Sequenz, um ein Referenzsignal des PBCH und einen durch den PBCH angegebenen Teil von Daten zu erzeugen;
Erlangen von Informationen zum Durchführen von Direktzugriff aus den in dem SS-Block enthaltenen Systeminformationen;
Durchführen (S2) von Direktzugriff mit der Basisstation unter Verwendung der Informationen zum Durchführen von Direktzugriff.

4. Verfahren zur Kommunikation in einer Basisstation, umfassend:
Übertragen (S1) an ein Endgerät von Informationen, die eine Übertragungsperiodizität für einen Synchronisationssignal-, SS-, Block angeben, der ein Synchronisationssignal und einen physikalischen Broadcast-Kanal, PBCH, enthält, einschließlich Systeminformationen, und Übertragen an das Endgerät eines Index, der einer Position im Zeitbereich des SS-Blocks entspricht, basierend auf einer Sequenz zur Erzeugung eines Referenzsignals des PBCHs, der die Systeminformationen und einen durch den PBCH angegebenen Teil von Daten überträgt;
Übertragen (S1) des SS-Blocks an das Endgerät, basierend auf der Übertragungsperiodizität;
Durchführen (S2) von Direktzugriff mit dem Endgerät unter Verwendung von Informationen zum Durchführen von Direktzugriff, die in der in dem SS-Block enthaltenen Systeminformation enthalten sind.

5. Drahtloses Kommunikationssystem, umfassend: ein Endgerät; und eine Basisstation, wobei
die Basisstation einschließt:
eine Sendeeinheit, die konfiguriert ist, an das Endgerät Informationen zu übertragen, die eine Übertragungsperiodizität für einen Synchronisationssignal-, SS-, Block angeben, der ein Synchronisationssignal und einen physikalischen Broadcast-Kanal, PBCH, enthält, einschließlich Systeminformationen, und an das Endgerät einen Index zu übertragen, der einer Position im Zeitbereich des SS-Blocks entspricht, basierend auf einer Sequenz zur Erzeugung eines Referenzsignals des die Systeminformationen und einen durch den PBCH angegebenen Teil von Daten übertragenden PBCH; und
eine Kommunikationseinheit, die konfiguriert ist, den SS-Block an das Endgerät, basierend auf der Übertragungsperiodizität, zu übertragen und Direktzugriff mit dem Endgerät unter Verwendung von Informationen zum Durchführen von Direktzugriff durchzuführen, die in der in dem SS-Block enthaltenen Systeminformation enthalten sind, und
wobei das Endgerät einschließt:
eine Empfangseinheit, die konfiguriert ist, von der Basisstation, basierend auf der Übertragungsperiodizität, den SS-Block zu empfangen und von der Basisstation den Index zu empfangen; und
eine Steuereinheit, die konfiguriert ist, Informationen zum Durchführen von Direktzugriff aus der in dem SS-Block enthaltenen Systeminformation zu erlangen und Direktzugriff mit der Basisstation unter Verwendung der Information zum Durchführen von Direktzugriff durchzuführen.

## Revendications

1. Terminal (200) comprenant :
une unité de réception (220) configurée pour recevoir, depuis une station de base (100) sur la base d'une périodicité de transmission, un bloc de signal de synchronisation, SS, contenant un signal de synchronisation et un canal physique de diffusion, PBCH, incluant des informations système indiquant la périodicité de transmission pour le bloc SS et pour recevoir, depuis la station de base (100), un indice correspondant à un emplacement dans le domaine temporel du bloc SS sur la base d'une séquence pour générer un signal de référence du PBCH et d'une partie de données indiquée par le PBCH ; et
une unité de commande (240) configurée pour acquérir des informations pour effectuer un accès aléatoire à partir des informations système contenues dans le bloc SS et effectuer un accès aléatoire avec la station de base en utilisant les informations pour effectuer un accès aléatoire.

2. Station de base (100) comprenant :
une unité de transmission (110) configurée pour transmettre, à un terminal, des informations indiquant une périodicité de transmission pour un bloc de signal de synchronisation, SS, contenant un signal de synchronisation et un canal physique de diffusion, PBCH, incluant des informations système et pour transmettre, au terminal, un indice correspondant à un emplacement dans le domaine temporel du bloc SS sur la base d'une séquence pour générer un signal de référence du canal physique de diffusion et d'une partie de données indiquée par le PBCH ;
une unité de communication (140) configurée pour transmettre le bloc SS au terminal sur la base de la périodicité de transmission et effectuer un accès aléatoire avec le terminal en utilisant les informations pour effectuer un accès aléatoire incluses dans les informations système contenues dans le bloc SS.

3. Procédé de communication dans un terminal comprenant :
la réception (S1), depuis une station de base sur la base d'une périodicité de transmission, d'un bloc de signal de synchronisation, SS, contenant un signal de synchronisation et un canal physique de diffusion, PBCH, incluant des informations système indiquant la périodicité de transmission pour le bloc SS, et la réception, depuis la station de base, d'un indice correspondant à un emplacement dans le domaine temporel du bloc SS sur la base d'une séquence pour générer un signal de référence du PBCH et d'une partie de données indiquée par le PBCH ;
l'acquisition d'informations pour effectuer un accès aléatoire à partir des informations système contenues dans le bloc SS ;
l'exécution (S2) d'un accès aléatoire avec la station de base en utilisant les informations pour effectuer un accès aléatoire.

4. Procédé de communication dans une station de base comprenant :
la transmission (S1), à un terminal, d'informations indiquant une périodicité de transmission pour un bloc de signal de synchronisation, SS, contenant un signal de synchronisation et un canal physique de diffusion, PBCH, incluant des informations système et la transmission, au terminal, d'un indice correspondant à un emplacement dans le domaine temporel du bloc SS sur la base d'une séquence pour générer un signal de référence du PBCH transmettant les informations système et une partie de données indiquée par le PBCH ;
la transmission (S1) du bloc SS au terminal sur la base de la périodicité de transmission ;
l'exécution (S2) d'un accès aléatoire avec le terminal en utilisant des informations pour effectuer un accès aléatoire incluses dans les informations système contenues dans le bloc SS.

5. Système de communication sans fil comprenant : un terminal ; et une station de base, dans lequel la station de base inclut :
une unité de transmission configurée pour transmettre, au terminal, des informations indiquant une périodicité de transmission pour un bloc de signal de synchronisation, SS, contenant un signal de synchronisation et un canal physique de diffusion, PBCH, incluant des informations système et pour transmettre, au terminal, un indice correspondant à un emplacement dans le domaine temporel du bloc SS sur la base d'une séquence pour générer un signal de référence du PBCH transmettant les informations système et une partie de données indiquée par le PBCH ; et
une unité de communication configurée pour transmettre le bloc SS au terminal sur la base de la périodicité de transmission et effectuer un accès aléatoire avec le terminal en utilisant des informations pour effectuer un accès aléatoire incluses dans les informations système contenues dans le bloc SS, et
le terminal inclut :
une unité de réception configurée pour recevoir, depuis la station de base sur la base de la périodicité de transmission, le bloc SS et pour recevoir, depuis la station de base, l'indice ; et
une unité de commande configurée pour acquérir des informations pour effectuer un accès aléatoire à partir des informations système contenues dans le bloc SS et effectuer un accès aléatoire avec la station de base en utilisant les informations pour effectuer un accès aléatoire.
